(19) Europäisches Patentamt
European Patent Office
Office européen des brevets

(11) EP 2 691 749 B1

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **12704367.7**

(22) Anmeldetag: **02.02.2012**

(51) Int Cl.:
***G01F 1/66*** *(2006.01)*

(86) Internationale Anmeldenummer:
**PCT/EP2012/000466**

(87) Internationale Veröffentlichungsnummer:
**WO 2012/130353 (04.10.2012 Gazette 2012/40)**

(54) **AKUSTISCHER DURCHFLUSSMESSER**

ACOUSTIC FLOW METER

DÉBITMÈTRE ACOUSTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2011 DE 102011015677**

(43) Veröffentlichungstag der Anmeldung:
**05.02.2014 Patentblatt 2014/06**

(60) Teilanmeldung:
**17001036.7**

(73) Patentinhaber: **Rosen Swiss AG**
**6370 Stans (CH)**

(72) Erfinder:
• **HEINKS, Carsten**
**49828 Neuenhaus (DE)**
• **TWERDOWSKI, Evgeny**
**49808 Lingen (DE)**

(74) Vertreter: **Busse & Busse**
**PATENT- UND RECHTSANWÄLTE**
**Partnerschaft mbB**
**Grosshandelsring 6**
**49084 Osnabrück (DE)**

(56) Entgegenhaltungen:
JP-A- 2001 074 759          US-A- 5 813 280
US-A1- 2007 151 363

**Beschreibung**

Die vorliegende Erfindung betrifft einen akustischen Durchflussmesser zur nicht invasiven Messung der Durchflussrate oder der Fließgeschwindigkeit in von Medien durchströmten, elektrisch leitenden Objekten, insbesondere von Rohren oder Pipelines, mit einem Sendewandler zur Erzeugung wenigstens einer Ultraschallwelle im Objekt, welche an einer zum Medium gerichteten Innenseite des Objekts als Welle, insbesondere als Longitudinalwelle, in das Medium eingekoppelt und mit einem Empfangswandler zur Detektion eines Ultraschallsignals im Objekt, wobei sich das Ultraschallsignal zumindest teilweise durch die (Longitudinal-) Welle ergibt.

Herkömmliche nichtinvasive Durchflussmesser müssen fest auf Rohre oder Pipelines geklemmt werden, damit der von einem Sendewandler erzeugte Ultraschall in das Rohr einkoppeln kann. Sowohl das Festklemmen des Gerätes wie auch der nachfolgende Betrieb beeinträchtigen nicht den Medientransport im Rohr, weswegen von einer nicht invasiven Flussmessung gesprochen wird. Oftmals werden zusätzlich keilförmige Akustikkoppler verwendet, die zwischen Piezoelement und Objekt angeordnet werden und die das von einem Sendewandler ausgegebene akustische Signal oftmals unter zusätzlicher Verwendung eines Kopplungsmediums in die Leitungswand einkoppeln.

Die Installation und Inbetriebnahme der Sende- und Empfangswandler am Rohr stellt einen kritischen Arbeitsschritt dar, da ein in Abhängigkeit des Mediums, der Wandstärke und des Materials definierter Abstand zwischen Sende- und Empfangswandler für die im Rohr erzeugten Ultraschallwellen exakt eingehalten werden muss. Bereits bei geringfügigen Abweichungen von dem optimalen Abstand verschlechtert sich das Signal deutlich. Darüber hinaus sind die herkömmlichen Ultraschalldurchflussmesser nur in einem vergleichsweise schmalen Temperaturbereich einsetzbar, wobei hierbei die Temperatur des Objekts, vorzugsweise eines Rohres oder einer Pipeline gemeint ist. Die Betriebstemperatur der Wandler muss deutlich unterhalb ihrer Curie-Temperatur liegen, die für eine Vielzahl verwendeter Wandler typischerweise zwischen 150° und 350° liegt. Eine Lösung zur Überwindung dieses Problems ist beispielsweise in der DE 4124692 A1 beschrieben, in der der Wandler mit einer speziellen Piezo-Keramik für Hochtemperaturanwendungen ausgebildet ist. Hiermit lassen sich Fließgeschwindigkeiten oder Flussraten von Medien in Objekten mit Temperaturen bis 180° messen. Zusätzlich zu der Temperaturproblematik können jedoch mitunter kritische Probleme aufgrund von Spannungen im Material des Akustikkopplers, die durch starke Temperaturgradienten erzeugt werden, entstehen. Weiterhin ist eine Alterung des zwischen Akustikkoppler und Rohr eingesetzten, meist gelartigen Kopplungsmediums problematisch. Mit zunehmendem Alter des Kopplungsmediums verringert sich die Signalqualität der im Objekt erzeugten Ultraschallwelle.

Aufgabe der vorliegenden Erfindung ist es, einen akustischen Durchflussmesser nach dem Stand der Technik für einen größeren Einsatzbereich auszubilden.

Die Aufgabe wird gelöst durch einen Gegenstand gemäß Anspruch 1. Vorteilhafte Weiterbildungen der Erfindung sind den hierauf rückbezogenen Unteransprüchen sowie der nachfolgenden Beschreibung zu entnehmen.

Erfindungsgemäß ist vorgesehen, dass der Sendewandler als Hochfrequenzinduktionsspule unter Verzicht auf eine akustische Kopplung des Sendewandlers mit der Oberfläche des Objekts zur Erzeugung eines variierenden Magnetfelds in einem oberflächennahen Bereich des metallischen Objekts ausgebildet ist und durch Wechselwirkung des variierenden Magnetfelds mit einem statischen oder quasistatischen Magnetfeld in diesem Bereich die Ultraschallwelle erzeugt wird. Ein oberflächennaher Bereich ist der durch die Eindringtiefe der durch die Hochfrequenzinduktionsspule erzeugten Wirbelströme definierter Bereich des Objekts.

Eine akustische Kopplung des erfindungsgemäßen Durchflussmessers mit dem Objekt, beispielsweise einer Pipeline oder einem Rohr ist nicht notwendig. Sende- und Empfangswandler des akustischen Durchflussmessers können beabstandet von dem Objekt angeordnet werden. Neben Messungen in Bereichen oberhalb von 180 °C kann auch den Durchfluss durch beschichtete Objekte wie beispielsweise mit Zement oder Kunststoff beschichtete Pipelines gemessen werden. Hierbei ist Voraussetzung, dass die Beschichtung durchlässig für elektromagnetische Felder ist. Eines im Stand der Technik notwendigen Entfernens einer Beschichtung des Objekts bedarf es nicht.

Obgleich der Sendewandler eines erfindungsgemäßen Durchflussmessers auch in physischem Kontakt mit dem Objekt sein kann, reicht es aus, wenn er in die Nähe des durchströmten Objekts positionierbar ist. Die Entfernungen können im Zentimeterbereich bis beispielsweise 2 cm liegen.

Durch die Verwendung der Hochfrequenzinduktionsspule (High Frequency Induction Coil) wird in einem oberflächennahen Bereich des Objekts ein magnetisches Wechselfeld erzeugt. Ein Teil des von der oder den Hochfrequenzinduktionsspulen erzeugten hochfrequenten Magnetfelds dringt in das Objekt ein und induziert Wirbelströme. Durch Wechselwirkung dieser Wirbelströme mit einem statischen oder quasi-statischen Magnetfeld wird aufgrund von Lorentzkräften oder Magnetostriktion eine Ultraschallwelle im Objekt erzeugt.

Unter einem quasi-statischen Magnetfeld wird ein Magnetfeld verstanden, welches in den Berechnungen gegenüber dem hochfrequenten Magnetfeld als statisch angesehen werden kann. Insbesondere variiert ein quasi-statisches Magnetfeld mit einer Frequenz $\leq 200$ Hz, bevorzugt $\leq 10$ Hz, so dass auch elektromagnetisch erzeugte Magnetfelder als statisches Magnetfeld angesehen werden können. Bei dem hochfrequenten Magnetfeld handelt es sich insbesondere um ein oszillierendes Magnetfeld.

Neben dem Vorteil, durch vorhandene Beschichtungen eines Rohres hindurch und in einem weiten Temperaturbereich messen zu können, ist die Vorrichtung aufgrund fehlender Kopplungsmedien geringeren Alterserscheinungen unterworfen. Ein im bekannten Stand der Technik oftmals auszutauschendes Kopplungsmedium wird nicht benötigt.

Ein erfindungsgemäßer Durchflussmesser wird vorliegend oftmals unter Bezugnahme auf ein Objekt beschrieben, an dem oder in dessen Nahfeld er angeordnet ist. Ein solches z.B. als Rohr ausgebildetes Objekt ist jedoch nicht Gegenstand der Erfindung, vielmehr ist der erfindungsgemäße Gegenstand dann für den Betrieb an einem solchen Rohr ausgebildet.

Für Signalanpassungszwecke ist die Frequenz, mit der ein Wandler betrieben werden kann vorzugsweise automatisch variierbar. Durch die Variierbarkeit oder Anpassung der Hochfrequenz, mit der der Sendewandler zu betreiben ist, kann sowohl die im Objekt erzeugte Ultraschallwelle wie auch die im Medium erzeugte Longitudinalwelle optimal auf den Empfangswandler ausgerichtet werden. Somit können Toleranzen in dem Abstand des Sendewandlers vom Empfangswandlers bzw. ungenaue Positionierungen, die im Stand der Technik umständlich manuell nachjustiert werden müssen, auf elektronische Weise ausgeglichen werden. Dies ergibt sich aus der für die Auslegung der Wandler verwendete Winkelabhängigkeit der erzeugten Transversalwellen, insbesondere der bulk shear Wellen (Volumenscherwellen) von der verwendeten Frequenz. Auch Schwankungen der Wellenausbreitung aufgrund von Druckänderungen im Rohr bzw. Temperaturänderungen können auf diese Weise ausgeglichen werden. Die Messgenauigkeit und die Anpassbarkeit des Systems sind gegenüber dem Stand der Technik deutlich verbessert. Die Hochfrequenz, mit der der Sendewandler betrieben werden kann, sind somit dergestalt zur Optimierung des empfangenen Signals variierbar, das eine im Medium induzierte Longitudinalwelle optimiert in Richtung des Empfangswandlers geführt wird. Insbesondere ist durch eine Frequenzänderung der Winkel φ21 der induzierten Ultraschallwelle gegenüber einer Lotrechten auf der Oberfläche des Objekts und damit auch der Kopplungswinkel am Übergang Objekt-Medium einstellbar. Diese Lotrechte steht insbesondere bei als Rechteckrohre ausgebildeten Objekten normal, d.h. senkrecht auf einer äußeren Oberfläche des Rohrs, wobei die Oberfläche parallel zu einer insbesondere durch eine Hauptrichtung eines Medienflusses bestimmbaren Axialrichtung liegt.

Vorteilhafterweise gilt unter der vereinfachenden Annahme von sich strahlenförmig ausbreitenden Wellen für die Erzeugung von Volumenscherwellen:

$$\sin(\varphi 21) = c_{wall}/(f * D),$$

mit

$c_{wall}$ = Schallgeschwindigkeit im Objekt,
$f$ = Hochfrequenz des Sendewandlers,
$D$ = ein sich aus dem Setup des Wandlers ergebender Abstand nebeneinanderliegender Leiterbahnen mit identischer Stromrichtung.

Vorzugsweise ist nicht nur der Sendewandler unter Verzicht auf eine akustische Kopplung mit dem Objekt betreibbar. Vielmehr gilt dies in einer weiteren Ausbildung der Erfindung auch für den Empfangswandler zur Detektion des Ultraschallsignals. Dieser ist insbesondere auch Hochfrequenzinduktionsspule ausgebildet. Nach einem Ausführungsbeispiel kann der Empfangswandler wie auch der Sendewandler senden und empfangen. Auf diese Weise lassen sich beispielsweise bekannte Verfahren zur Messung der Laufzeitunterschiede, die zur Auswertung von Durchflussgeschwindigkeiten bzw. Flussraten verwendet werden, auf der erfindungsgemäßen Vorrichtung über lediglich zwei Wandler realisieren. Auch die Verwendung lediglich eines Wandlers ist möglich.

Vorteilhafterweise wird die erfindungsgemäße Vorrichtung pulsartig oder -"burst"-artig betrieben. Hierbei wird über einen Hochfrequenzpuls oder-burst der Sendewandler für eine geringe Anzahl von Perioden, vorzugsweise weniger als 50 Perioden, mit der Hochfrequenz betrieben, woraufhin sich eine Ultraschallwelle im Objekt ausbreitet. Insbesondere ist der Sendewandler zur Erzeugung von Lamb-Wellen oder von shear bulk-Wellen ausgelegt, die jeweils am Übergang Objekt/Medium gewünschte Longitudinalwellen erzeugen. Die Longitudinalwelle erzeugt beim Auftreffen auf eine gegenüberliegende Innenwand des Objekts in diesem wiederum eine Ultraschallwelle, welche gegenüber der unmittelbar im Objekt erzeugten und in der Objektwand weitergeleiteten Ultraschallwelle zeitverzögert vom Empfangswandler detektiert werden kann. Aufgrund der Zeitverzögerung lassen sich die Signale der Wellen trennen, so dass eine durch die Geschwindigkeit des Mediums variiertes Ultraschallsignal gemessen werden kann. Durch Umschalten von Sende- und Empfangswandler in Empfangs- und Sendewandler und das Durchlaufen des Mediums in die entgegengesetzte Richtung können Laufzeitunterschiede zwischen den vom Medium variierten Signal gemessen werden, was letztlich Rückschlüsse auf die Fließgeschwindigkeit und die Rate erlaubt.

Anstelle eines Umschaltens können auch zwei zusätzliche Spulen verwendet werden, von denen eine als Empfangswandler dicht bei dem Sendewandler angeordnet ist und die andere als Sendewandler dicht bei dem Empfangswandler liegt. Insbesondere können die Leiterbahnen der dicht beieinander angeordneten Spulen neben- und/oder übereinander angeordnet werden. Bei einer Messung mit umgeschalteten Wandlern liegt die Umschaltungsfrequenz in einem Bereich von 10 Hz bis 200 Hz, bevorzugt in einem Bereich zwischen 50 Hz und 100 Hz. Durch die Vielzahl der Messungen lässt sich eine sehr hohe Messgenauigkeit erreichen.

In einer weiteren Ausbildung der Erfindung ist ein erfindungsgemäßer Durchflussmesser zusätzlich zur Erzeugung eines statischen oder quasi-statischen Magnetfelds ausgebildet, welches längs einer Axialrichtung des Objekts oder normal zu dieser ausrichtbar ist. Hierzu kann der Durchflussmesser einen Permanentmagneten und/oder einen Elektromagneten aufweisen. Während die Verwendung eines Permanentmagneten technisch weniger aufwendig ist, lässt sich die Verwendung eines Elektromagneten insbesondere zur automatischen Amplitudenanpassung verwenden. Ein Elektromagnet kann beispielsweise durch Umwicklung des Objekts, beispielsweise eine spiralförmige Umwicklung eines Rohres, erzeugt werden oder durch mit Strom beaufschlagbaren Leitern umwickelte Polschuhe aus ferromagnetischem Material ausgebildet werden.

Vorzugsweise ist zur Optimierung des Messsignals die Leiterbahn der Hochfrequenzspule für die bestimmungsgemäße Anwendung senkrecht zur Längsachse und in Umfangsrichtung des Objekts auszurichten, d.h. das Setup des akustischen Durchflussmessers ist beispielsweise für Rohre darauf ausgerichtet, dass die Leiterbahn oder auch Leiterbahnen der Hochfrequenzspule im Wesentlichen senkrecht zur Längsachse des Objekts verlaufen. Hierdurch wird eine in das Medium eingekoppelte Longitudinalwelle bei einer im Querschnitt runden Pipeline oder Röhre immer deren Längsmittelachse (Pipelineachse) kreuzen. Für erfindungsgemäß vorgesehene mäandrierende Hochfrequenzspulenleiterbahnen bedeutet dies, dass deren längere Abschnitte senkrecht zur Längsachse ausgerichtet sind, wobei schmale Übergänge zwischen hin- und herlaufenden Leiterbahnen vernachlässigbar sind. Insbesondere sind die Leiterbahnen als Wicklung ausbildbar, wobei es sich bei den Induktionsspulen dann um "klassische", gewickelte Spulen handeln kann. Ein Wandler einer nicht erfindungsgemäßen Vorrichtung, der als Sendewandler fungiert, ist auf die Erzeugung von "bulk"-Wellen, d.h. Volumenwellen, insbesondere von shear bulk-Wellen, ausgelegt. Für nicht-ferromagnetische, jedoch elektrisch leitende Materialen sind die Wandler wiederum auf die Erzeugung von bulk Longitudinalwellen ausgelegt.

Eine besonders gleichmäßige Durchschallung wird erreicht, wenn der Sendewandler auf die Erzeugung von Lamb-Wellen n-ter Ordnung ausgelegt ist, wobei n ganzzeilig und $\geq 0$ ist. Die Verwendung nullter oder höherer Moden, insbesondere von Moden der Ordnung n = 0, 1 oder 2 hat sich insbesondere für Durchflussmessungen von wässrigen, ölhaltigen und gasförmigen Medien als geeignet und für eine deutliche Ausbildung von Longitudinalwellen als passend gezeigt. Durch die Frequenzanpassung des Wandlers lassen sich gewünschte optimale Moden einstellen.

Für kleinere, insbesondere rohrförmige Objekte, mit Durchmessern von vorzugsweise weniger als 5 cm können die Wandler gezielt auf die Erzeugung von geführten Wellen in Form von Flexural Waves ausgelegt werden.

Unter der Auslegung der Wandler wird insbesondere deren einzustellende Frequenz und die Anordnung des statischen (oder quasi-statischen) Magnetfeldes und die Anordnung der Leiterbahn oder-bahnen verstanden. Die Einstellung der Hochfrequenz der Wandler zur Erzeugung von Lamb-Wellen oder Scherwellen erfolgt insbesondere in Abhängigkeit von der Stärke der Wand des Objekt, in der die Ultraschallwelle erzeugt werden sollen.

Ein akustischer Durchflussmesser kann allgemein neben einem Sende- und einem Empfangswandler eine Vorrichtung zur Magnetisierung des Objekts wie vorbeschrieben, eine Elektronik für die Anregung und eine Empfangselektronik inklusive einer Signalauswertung aufweisen. Sende- und Empfangswandler können auch durch eine einzige Hochfrequenzinduktionsspule realisiert werden. Ebenfalls kann der Durchflussmesser Schnittstellen für die Anbindung einzelner Netzwerkgeräte, Computer oder anderer Aufzeichnungs- bzw. Displayeinheiten aufweisen.

Vorteilhafterweise ist die Hochfrequenzspule in einem Frequenzbereich von 20 kHz bis 50 MHz, bevorzugt zwischen 50 kHz und 3 MHz, für die Erzeugung der Ultraschallwelle betreibbar. Insbesondere für Wandstärken kleiner als 1 mm sind Frequenzen zwischen 3 und 50 MHz vorteilhaft, während für typische Wandstärken von 1 mm bis 10 mm Frequenzen zwischen 20 kHz und 3 MHz vorteilhaft sind. In diesem Bereich ist für eine Vielzahl von ferromagnetischen bzw. stahlhaltigen Pipelinematerialien die Anregung von Ultraschallwellen insbesondere bei Magnetfeldstärken in einem Bereich von 5 bis 20 kA/m möglich.

Zur verbesserten Erzeugung einer Ultraschallwelle im Objekt ist bei einer weiteren Ausbildung der Erfindung die zum Objekt zu richtende Seite von Sende- und/oder Empfangswandler gekrümmt ausgebildet, so dass diese beispielsweise komplett oder in einem geringen, gleichbleibendem Abstand an eine mit einer Krümmung versehene Rohraußenwand oder deren Beschichtung heranführbar ist. Ziel ist es hierbei, bei Anlage an oder Anordnung dicht bei einem Objekt eine zu dessen Oberfläche zumindest im Wesentlichen parallele Ausrichtung der Seite des Wandlers und damit der in der Regel parallel zu der Seite verlaufenden Leiterbahnen eines Wandlers zu erhalten.

Sende- und Empfangswandler können in einer weiter verbesserten Ausführungsform zum Anlegen an das Rohr und/oder sogar zum Umwickeln des Rohrs ausgebildet sein. In einem solchen Fall können beispielsweise Rohre zur Ausbildung eines stationären Durchflussmesser umwickelt oder umfasst werden. Bei einer vollständigen Umwicklung können Ultraschallwellen entlang des gesamten Umfangs des Rohres erzeugt werden, womit vollumfänglich Longitudinalwellen in das Medium eingekoppelt werden und der gesamte Rohrleitungsquerschnitt durchschallt werden kann. Da durch die Einkopplung von allen Seiten und das sich Ausbreiten der Longitudinalwellen zur gegenüberliegenden Seite der innere freie Rohrleitungsquerschnitt doppelt abgedeckt wird, kann bereits eine halbe Umwicklung des Rohres mit einer Hochfrequenzinduktionsspule für eine Erfassung des vollständigen Rohrleitungsinnenraum ausreichen.

Vorzugsweise sind Sende- und/oder Empfangswandler mittels um das Objekt herum zu wickelnde oder herum zu legende Leiterbahnen ausgebildet, was einen kostengünstigen und einfachen Aufbau der Vorrichtung ermöglicht und gleichzeitig eine vollständige Erfassung eines Objektumfangs ermöglicht. Hierdurch ist anders als im Stand der Technik eine Abdeckung des gesamten inneren freien Rohrleitungsquerschnitts möglich. Die Krümmung der Leiterbahnen ist zur Erhöhung der Anpassbarkeit vorzugsweise variierbar. Darüber hinaus wird durch eine vollständige, und insbesondere mehrfache Umwicklung eines Objekts der Einfluss von störenden Kanten-Wellen aufgrund von kurzen Übergangsabschnitten mäandrierender Leiterbahnen minimiert. Eine kanteneffektfreie 360°-Umwicklung eines Objekts durch die Leiterbahn führt zu einer Vermeidung von Störsignalen.

Die Anpassbarkeit eines erfindungsgemäßen Durchflussmessers ist des Weiteren erhöht, wenn Sende- und Empfangswandler zumindest in Teilen flexibel, d.h. z.B. biegsam, ausgebildet sind, um an unterschiedliche Objektaußendurchmesser und Objektformen anpassbar zu sein. Vorzugsweise handelt es sich hierbei um eine mit einem elektrischen Leiter versehene Folie oder ein Flachbandkabel, die zumindest teilweise um beispielsweise ein Rohr wickelbar ist. Eine Haltevorrichtung des Durchflussmessers kann hierfür zwei jeweilige Seiten der Folie oder des Flachbandkabels aufnehmende, gegeneinander verschwenkbare Arme aufweisen. Verwendbar sind insbesondere bekannte und häufig kostengünstige Flachbandkabel, die im Vergleich zu Folien in der Regel hochtemperaturbeständiger sind.

Die Leiterbahnen einer Hochfrequenzinduktionsspule, z.B. in einer Folie können mäandrierend ausgebildet sein. Sie können auch spiralförmig um das Rohr wickelbar sein. Mäandrierend meint in diesem Fall eine Ausbildung, durch die die Stromrichtungen der jeweils benachbarten und insbesondere paralleler Leiterbahnabschnitte (in Umfangsrichtung des zu prüfenden Objekts) entgegengesetzt gerichtet sind. Beispielsweise handelt es sich bei der oder den Leiterbahnen um ein mehradriges Flachbandkabel, dessen Leiter endseitig so miteinander verbunden sind, dass sich die Stromrichtungen benachbarter Leiterbahnen abwechseln.

Ein erfindungsgemäßer Durchflussmesser ist insbesondere mit zwei Paaren von Sende- und Empfangswandler versehen, so dass ohne ein Umschalten eines Wandlers von Sende- zu Empfangswandler zwischen den Paaren geschaltet werden kann. Hierfür sind die Leiterbahnen der Wandler der jeweiligen Paare vorzugsweise dicht parallel beieinander angeordnet und insbesondere übereinander oder nebeneinander gelegt.

Zur vollständigen Abdeckung des freien Rohr- bzw. Objektinnenraumes, durch den das Medium fließt, genügt es wie vorbeschrieben, wenn Sende- und Empfangswandler auf gegenüberliegenden Seite eines Rohres positionierbar sind und jeweils 180° des Rohraußenumfangs abdecken. Hierdurch ist eine vollständige Abdeckung der freien Querschnittsfläche im Rohr möglich.

Zur einfachen Positionierung der Sende- und Empfangswandler können diese über miteinander verbundene verschwenkbare Arme verfügen, über die eine Klemmung an dem Objekt herbeigeführt werden kann.

Vorteilhafterweise ist bei der Verwendung eines den gesamten freien Innenraum des Rohres abdeckenden Durchflussmessers die Auswerteeinrichtung zur Detektion und/oder Größenbestimmung von Blasen im Fluid, d.h. von insbesondere Gasblasen in einem flüssigen Medium, ausgebildet. Hierbei kann z.B. Überwachung und Auswertung der Signalamplitude nicht nur das Vorhandensein von Blasen, sondern auch die Größe von Blasen, die sich als Amplitudenabschwächungen im Auswertesignal wiederfinden lassen, bestimmt werden.

In einem bevorzugten Setup des Durchflussmessers zur Erzeugung von Lamb-Wellen ist dieser ergänzend zur Messung der Wandstärke (vorzugsweise durch Auswertung der Dispersionskurven) und/oder des Druckes des Mediums anhand des Ultraschallsignals ausgebildet, so dass das empfangene Flusssignal bei sich ändernden Randbedingungen automatisch optimiert werden kann. Für die Druckmessung kann insbesondere die Abhängigkeit der Schallgeschwindigkeit vom Druck verwendet werden. Mit Hilfe der Frequenzanpassung lassen sich Schallgeschwindigkeitsvariationen nachregeln. Unter der Voraussetzung konstanter anderer Parameter wie der Temperatur ist die eingestellte Frequenz ein Maß für den Druck. Bereits durch die aufgrund der erfindungsgemäßen Ausbildung mögliche, geringfügige Beabstandung von wenigen Millimetern und die hiermit einhergehende mechanische Entkopplung des erfindungsgemäßen Durchflussmessers vom Objekt können Messungen von einem mehr als 180°C, vorzugsweise einem mehr als 350°C heißen Objekt durchgeführt werden. Darüber hinaus sind Sende- und Empfangswandler mittels entsprechender Materialien derart hitzebeständig ausgebildet, dass sie zur vorzugsweise berührungsfreien Messung des Durchflusses in einem mehr als 180° heißen, bevorzugt in einem mehr als 350° heißen Objekt ausgebildet sind.

Während eine erfindungsgemäße Vorrichtung vorzugsweise von einer einzelnen Bedienperson tragbar und somit nicht schwerer als 50 kg, vorzugsweise nicht schwerer als 25 kg, ist, kann der Durchflussmesser bei einer weiteren Ausbildung der Erfindung auch modular aufgebaut sein. Hierunter ist ein Durchflussmesser bzw. -messgerät zu verstehen, dessen Sende- und/oder Empfangswandler dauerhaft an einem Objekt positionierbar sind und die zur Messung des Durchflusses mit einer insbesondere vom Bedienpersonal tragbaren Ansteuer- und Auswerteeinheit verbindbar sind, wobei zusätzlich der Durchflussmesser eine Vorrichtung zur Erzeugung eines statischen oder quasi statischen Magnetfeldes aufweisen kann.

So können beispielsweise Leiterbahnen an Rohren bzw. um Rohre gewickelte Leiterbahnen verbleiben und der Aufwand für eine schnelle Messung an einer Vielzahl von bereits umwickelten Rohren verringert sich gegenüber dem Stand der Technik erheblich.

Weitere Vorteile und Einzelheiten der Erfindung lassen sich der nachfolgenden Figurenbeschreibung entnehmen.

In den Figuren zeigt auf schematische Art und Weise:

Fig. 1       eine Schnittdarstellung eines Durchflussmessers nach dem Stand der Technik,

Fig. 2       einen Teil eines erfindungsgemäßen Gegenstands in einer Ansicht gemäß Fig. 1,

Fig. 3       die Anwendung des erfindungsgemäßen Gegenstands bei einem beschichteten Objekt,

Fig. 4a,b       einen Teil eines weiteren erfindungsgemäßen Gegenstand,

Fig. 5       eine Darstellung eines weiteren Anwendungsfalls eines erfindungsgemäßen Gegenstands,

Fig. 6       einen weiteren erfindungsgemäßen Gegenstand in einer Teilansicht,

Fig. 7       einen weiteren erfindungsgemäßen Gegenstand (in einer Teilansicht),

Fig. 8 bis 12       Konfigurationsmöglichkeiten des Sende- bzw. Empfangswandlers eines erfindungsgemäßen Gegenstands,

Fig. 13 bis 16       Setups verschiedener erfindungsgemäßer Gegenstände, die sich bezüglich der Magnetfelderzeugung unterscheiden,

Fig. 17       eine Prinzipdarstellung eines erfindungsgemäßen Gegenstands mit einer automatischen Anpassung,

Fig. 18       ein Funktionsdiagramm für den Betrieb des erfindungsgemäßen Gegenstands gemäß Fig. 17,

Fig. 19 und 20       Gesamtansichten einzelner erfindungsgemäßer Gegenstände,

Fig. 21       ein Funktionsdiagramm zur Veranschaulichung eines erfindungsgemäßen Verfahrens,

Fig. 22       einen erfindungsgemäßen Gegenstand in einer weiteren Konfiguration.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

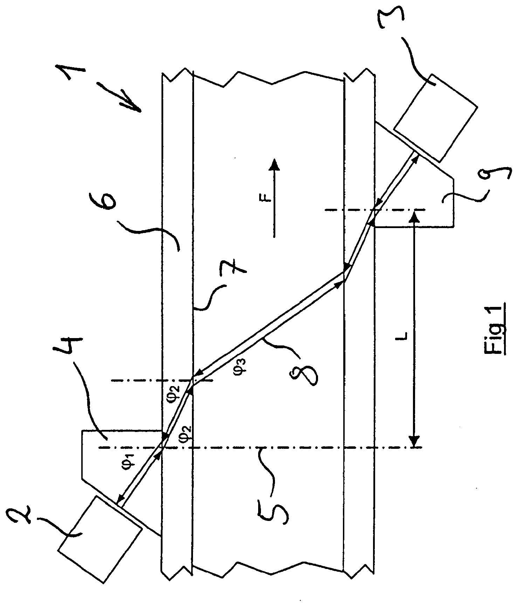

Fig. 1 zeigt ein aus dem bekannten Stand der Technik bekanntes Setup zur Messung des Flusses F eines Mediums, insbesondere eines Gases oder einer Flüssigkeit, in einem geschnitten dargestellten Rohr 1. Ein piezo-elektrischer Ultraschallwandler 2 kann wie ein piezo-elektrischer Ultraschallwandler 3 sowohl als Sende- wie auch als Empfangswandler agieren. Ausgehend von beispielsweise dem Sendewandler 2 wird ein Ultraschallsignal über einen keilförmige Akkustikkoppler 4 unter einem Winkel $\varphi 1$ (gemessen gegenüber einer Lotrechten 5 zur Rohroberfläche) in die Rohrwand 6 eingekoppelt. Unter der Annahme, dass sich die Ultraschallwelle in der Rohrwand 6 strahlenförmig ausbreitet, gelangt die Welle an die Rohrinnenseite 7 und koppelt dort unter einem Winkel $\varphi 3$ in das Medium ein. In diesem wird die als Longitudinalwelle 8 eingekoppelte Schallwelle durch den Fluss des Mediums variiert und gelangt an die in der Figur untere Innenseite der Rohrwand. Bezüglich der Umfangsrichtung der Rohrinnenwand handelt es sich um eine der Einkoppelstelle gegenüberliegende Seite der Rohrinnenwand, die aufgrund des in Richtung F weisenden Wellenvektoranteils axial versetzt ist. An dieser unteren Seite erfolgt wiederum eine Einkoppelung in die Rohrwand 6 hin zu einem weiteren Akkustikkoppler 9. Durch dieses hindurch gelangt das vom Medium beeinflusste Ultraschallsignal zu dem in diesem Fall als Empfangswandler fungierenden Wandler 3. In einem weiteren Operationsmodus ist der Empfangswandler 3 dann in einem nächsten Schritt als Sendewandler tätig und emitiert eine Ultraschallwelle über das Kopplungsmittel 9 in Richtung des nun als Empfangswandlers fungierenden Wandlers 2. Ersichtlich kommt es für einen funktionierenden Aufbau bei diesem Setup auf die Beabstandung L der Übergänge des Ultraschallsignals zwischen Kopplungsmittel 4 bzw. Kopplungsmittel 9 und der Rohrwand 6 an. Geringfügige Abweichungen in dem Abstand der beiden Akkustikkoppler voneinander führen zu einer Abschwächung oder einem vollständigen Verlust des Signals und so zu einem schlechteren oder gar keinem Messergebnis.

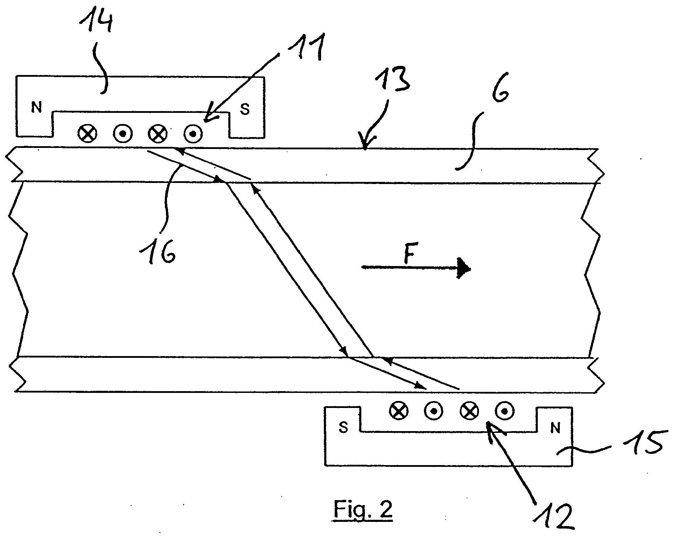

In Fig. 2 ist ein erfindungsgemäße akustischer Durchflussmesser (in Teilen) gezeigt, der neben einem ersten als Sende- und Empfangswandler fungierenden Wandler 11 einen weiteren als Sende- und Empfangswandler fungierenden Wandler 12 zeigt. Beide Wandler 11 und 12 sind als Hochfrequenzinduktionsspulen ausgebildet. Beide Hochfrequenzinduktionsspulen 11 und 12 können in einem der äußeren Oberfläche 13 nahen Bereich der Rohrwand 6 Wirbelströme induzieren. Diese Wirbelströme wechselwirken mit einem im vorliegenden Ausführungsbeispiel der Fig. 2 von zwei polschuhartigen Permanentmagneten 14 und 15 in der Rohrwand 6 erzeugten, statischen Magnetfeld. Durch die Wechselwirkung entstehen in der Rohrwand gerichtete Ultraschallwellen. Eine solche Ultraschallwelle 16 ist beispielsweise als Volumenscherwelle ausgebildet und koppelt in das in Richtung des Flusses F fließende Medium ein. Auf der gegenüberliegenden Seite der Rohrrinnenwand koppelt die Longitudinalwelle wieder in die Rohrrinnenwand und kann dort von der dann als Empfangswandler fungierenden Hochfrequenzinduktionsspule 12 detektiert werden. Die Vorrichtung kann mit verschiedenen Setups für die Hochfrequenzinduktionsspulen 11 und 12 sowie auch mit verschiedenen Setups bezüglich der Magnete 14 und 15 betrieben werden, was vorstehend und nachfolgend weiter beschrieben ist.

Wie bereits in der Fig. 2 angedeutet, ist die Verwendung eines Kopplungsmediums nicht notwendig. Hierdurch wird die Installation der Wandler in der Nähe des Rohres oder auch an dem Rohr vereinfacht. Durch die mögliche Beabstandung oder die Verwendung von wärmeisolierenden Schichten zwischen Sende- und Empfangswandler und dem Rohr 6 kann auch an sehr heißen Rohren gemessen werden.

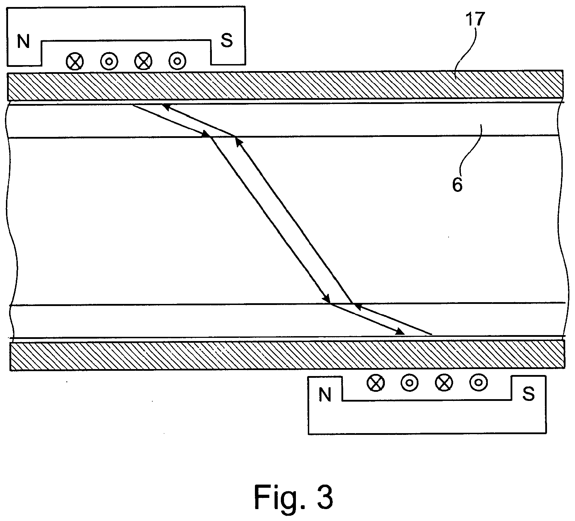

Eine schematische Darstellung eines Messaufbaus für ein mit einer Beschichtung 17 versehenes Rohr 6 ist in Fig. 3 dargestellt. Die Beschichtung muss zur Erzeugung der Ultraschallwelle im Rohr 6 nicht entfernt werden, wie dies im Stand der Technik notwendig ist. Mithin ist die Messung des Flusses durch beschichtete Rohre vereinfacht durchführbar.

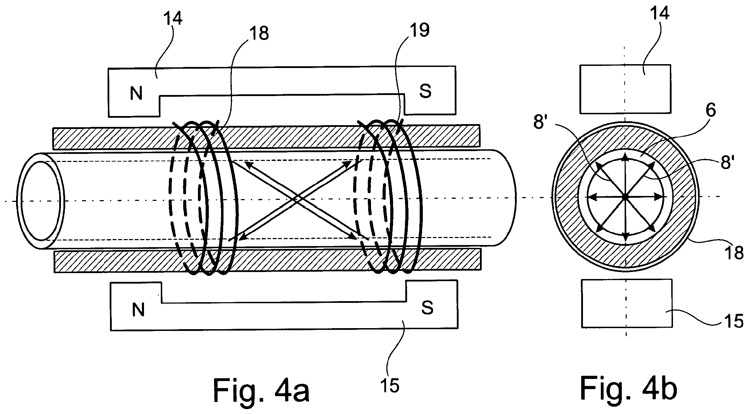

Sende- und Empfangswandler können als flexible Wandler z.B. mittels eines elektrischen Leiters ausgebildet werden, der gemäß Fig. 4a beispielsweise um ein beschichtetes Rohr gewickelt werden kann. Gemäß Fig. 4a weist ein erfindungsgemäßer Durchflussmesser zwei Sende- bzw. Empfangswandler auf, die Leiterbahnen 18 und 19 umfassen, die aufgrund ihrer vollständigen Umwicklung des Rohres den freien Rohrleitungsquerschnitt doppelt abdecken. So können im Rohr entlang des gesamten Umfangs (vgl. Fig. 4b) von der Rohrinnenseite Wellen in das Medium eingekoppelt werden, die zur gegenüberliegenden Seite laufen. In der Fig. 4b ist dies durch insgesamt vier Doppelpfeile 8' visualisiert. Die vollständige Abdeckung erhöht die Messgenauigkeit gegenüber diskontinuierlichen, diskreten Messanordnungen, wie sie im Stand der Technik bekannt sind, und ist insbesondere für turbulente Flüsse geeignet. Darüber hinaus können aufgrund der vollständigen Abdeckung eine zuverlässige Detektion und sogar eine Berechnung von der Größe von Gasblasen vorgenommen werden.

Die beiden Wandler 18 und 19 werden im Setup gemäß Fig. 4a von zwei Magneten auf ihrer vom Rohr abgewandten Seite übergriffen, die im gesamten Rohrleitungsquerschnitt eine Magnetisierung hervorrufen. Die Magnete können das Rohr auch vollumfänglich umschließen. Bei größeren Rohrquerschnitten können auch mehrere Magnete in Umfangsrichtung um das Rohr herum angeordnet werden.

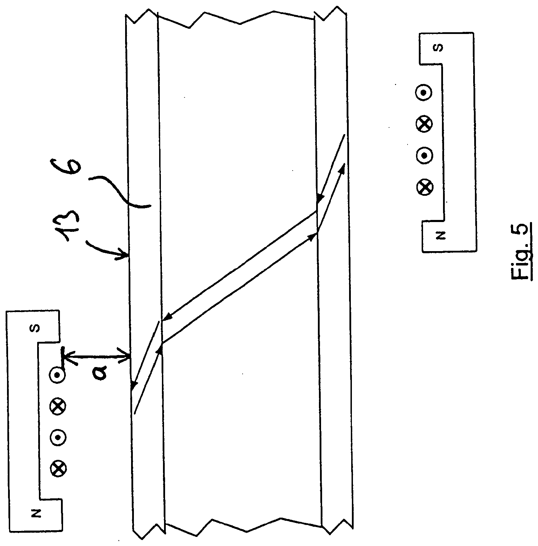

Fig. 5 verdeutlicht den erfindungsgemäßen Vorteil, in mehr als 180°C heißen Rohren 6 eine verlässliche Durchflussmessung durchzuführen. Hierfür beträgt der Abstand a zwischen der äußeren Oberfläche 13 des Rohres und dem Wandler bzw. dem Durchflussmesser vorzugsweise zwischen 0,1 cm und 5 cm, insbesondere zwischen 0,1 cm und 1 cm.

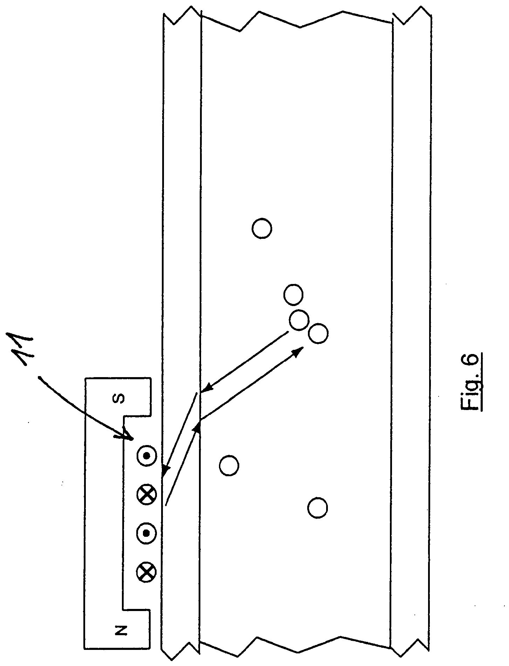

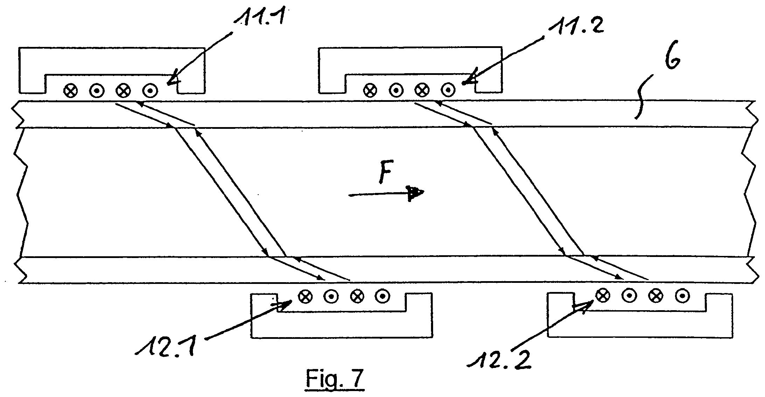

Während in den Figuren 2 bis 5 der Zeitversatz zwischen entlang entgegengerichteter Pfade verlaufende Ultraschallwellen ausgewertet wurde, ist in der Fig. 6 ein Setup einer weiteren erfindungsgemäßen Vorrichtung gezeigt, in der nach dem Dopplerprinzip ausgewertet wird. Hierbei ist die Vorrichtung mit lediglich einem Wandler in Form einer Hochfrequenzinduktionsspule versehen, die sowohl als Sende- wie auch als Empfangswandler fungiert. Dieser Wandler ist zusammen mit der Auswertelektronik in der Lage, sich aufgrund von bewegenden Teilchen ergebende Frequenzänderungen (Dopplereffekt) einer reflektierten Ultraschallwelle zu messen. Insbesondere für turbulente Flüsse bietet sich eine Messmethode und ein Setup gemäß Fig. 7 an. Hierbei wird insbesondere für turbulente Flüsse davon ausgegangen, dass sich deren turbulente Strukturen innerhalb einer bestimmten Distanz (sogenannte Korrelationslänge) nicht ändern. Jeweils ein Sende- und ein Empfangswandler sind in Längsrichtung eines Objektes, hier ebenfalls wiederum ein Rohr, beabstandet angeordnet. Von beiden Wandlerpaaren 11.1, 12.1 und 11.2 und 12.2 wird die Signatur des turbulenten Flusses gemessen und über eine Kreuz-Korrelationssignalauswertung eine Zeitverzögerung bestimmt. Diese Zeitverzögerung ist ein Maß für die Fließgeschwindigkeit F bzw. die Transportrate des Mediums.

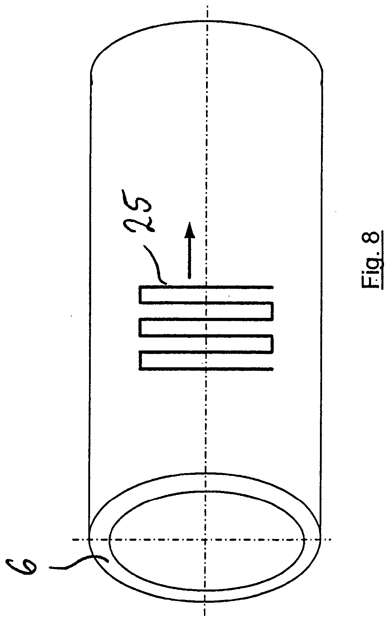

Die Fig. 8 bis 12 zeigen eine Reihe von unterschiedlichen Wicklungen bzw. Setups der Hochfrequenzspule oder -spulen. Vorteilhafterweise sind diese aus einem flexiblen Leiter hergestellt und lassen sich beispielsweise in eine flexible Folie eingehüllt dem äußeren Umfang des Objekts anlegen. Eine flexible Hochfrequenzinduktionsspule hat mithin den Vorteil, dass sie an eine Vielzahl unterschiedlicher Rohrdurchmesser anpassbar ist.

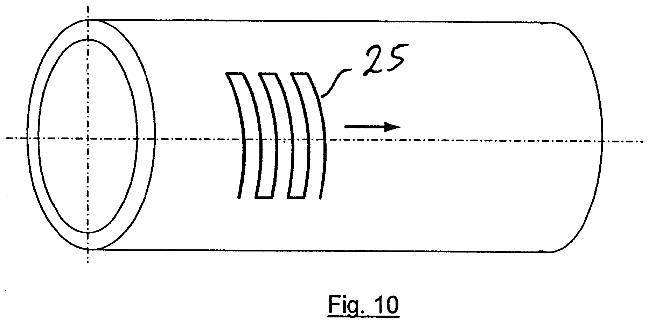

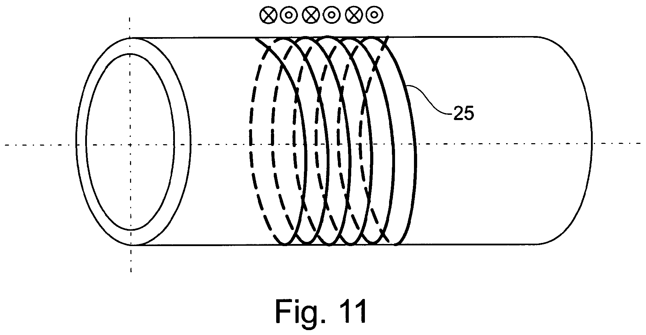

Ein Wandler kann zur Abdeckung des gesamten Umfang eines Rohres ausgebildet sein, wie dies beispielsweise in Fig. 11 gezeigt ist. Hierbei sind die einzelnen Windungen oder Leiterbahnabschnitte einer Leiterbahn 25 der Hochfrequenzspule mäanderförmig aneinandergelegt, so dass sich die oberhalb des Rohres angedeuteten Stromrichtungen ergeben. Ein ähnlicher Wandler ist in der Fig. 8 gezeigt, wobei sich dieser Wandler jedoch nur über einen Teilumfang des Rohres erstrecken kann, ähnlich wie der in Fig. 10. Im Unterschied zu dem der Fig. 8 ist der Wandler der Krümmung des Rohres in der Fig. 10 angepasst. In der Fig. 8 handelt es sich hierbei um einen nicht an im Querschnitt kreisförmige Rohre angepassten Wandler.

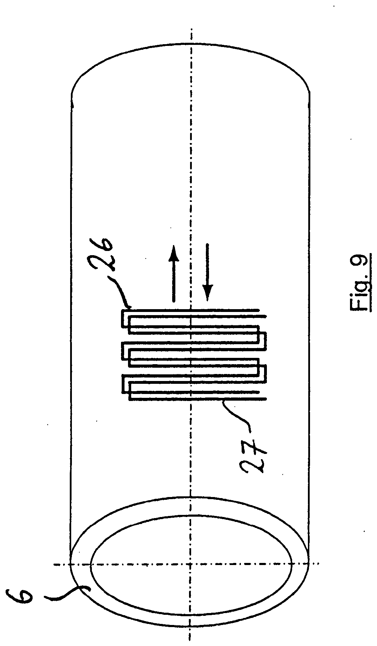

Zum Aufbau eines kompakten Durchflussmessers kann auch eine Überlagerung zweier Leiterbahnen 26 und 27 (Fig. 9) dienen. Sende- und Empfangswandler sind in einem nahezu identischen Rohrbereich mit zueinander parallelen Leiterbahnabschnitten befestigbar und bilden ein Paar von Sende- und Empfangswandler aus. Ein erfindungsgemäßer Durchflussmesser weist vorzugsweise zwei identischen Sende-/Empfangswandler auf, wobei die Ausbildung der Leiterbahnen nicht notwendigerweise der der Fig. 9 entsprechen muss. Vielmehr kann es sich hierbei auch um in den weiteren Figuren gezeigte Leiterbahnen handeln.

Durch eine Mäanderform der Leiterbahn wird allgemein eine Änderung der Stromrichtung der Eddy-Wirbelströme in axialer Richtung bewirkt, was zur Ausbildung einer unter einem Winkel in das Rohr und somit teilweise in axialer Richtung desselben eingekoppelten Ultraschallwelle führt. Gestrichelte Abschnitte zeigen in den Figuren den Verlauf der Leiterbahnen auf der nicht sichtbaren Seite des Objekts. Anstelle eines mäanderförmigen Verlaufs der Leiterbahn kann auch ein sich periodisch abwechselndes statisches oder quasi-statisches Magnetfeld verwendet werden, welches z.B. durch abwechselnd aneinander gesetzte Permanentmagnete mit N-S und S-N-Ausrichtung erzeugt wird.

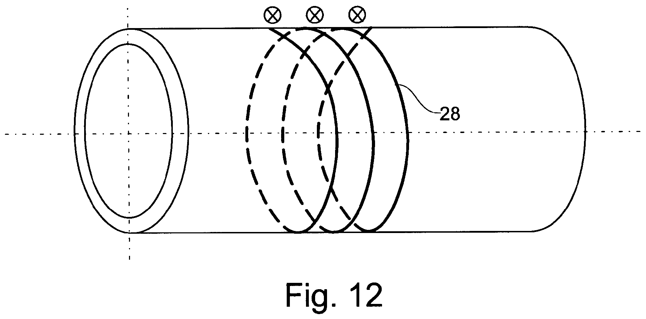

Gemäß Fig. 12 ist ein einzelner Leiter 28 spiralförmig und nicht mäandrierend um das Rohr gewickelt, wobei der Abstand bei der Wicklung und somit der Abstand der einzelnen nebeneinander liegenden Leiterbahnabschnitte vorteilhafterweise so groß ist, dass zwischen den durch die einzelnen Wicklungen angeregten Eddy-Strom-Bereiche mit Eddy-Strömen geringerer Amplitude ausbilden.

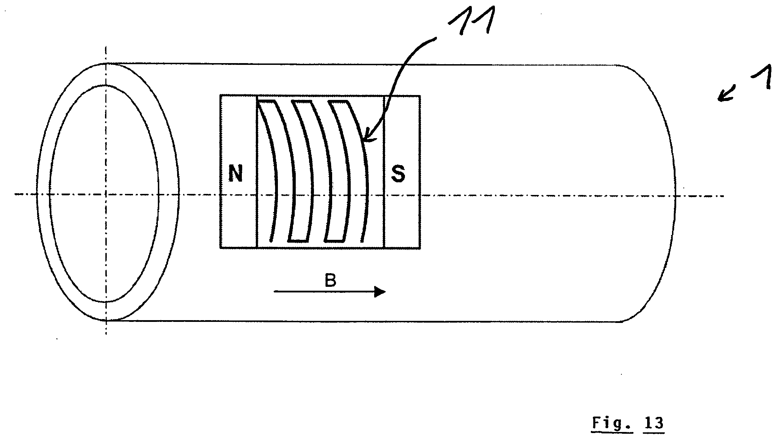

In den Fig. 13 bis Fig. 16 sind Setups von (schematisch und wiederum teilweise dargestellten) erfindungsgemäßen Durchflussmessern mit unterschiedlichen Konfigurationen zur Magnetfelderzeugung gezeigt. Dieses ist entweder normal zur Oberfläche des Rohres oder axial des Objekts ausgebildet.

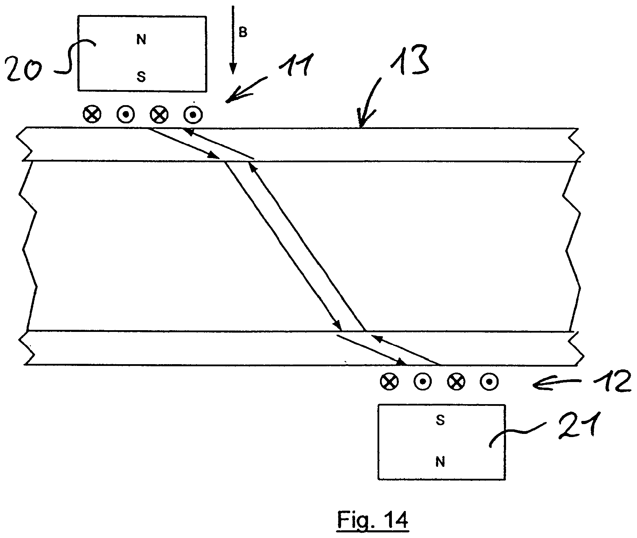

Bei dem Ausführungsbeispiel der Fig. 13 liegt ein Sendewandler 11 in einem von einem Permanentmagneten erzeugten Magnetfeld B, welches in Achslängsrichtung des Rohres 1 ausgerichtet ist. Alternativ dazu ist in der Fig. 14 eine Konfiguration eines erfindungsgemäßen Durchflussmessers gezeigt, bei dem das angelegte Magnetfeld B normal zur Oberfläche 13 des Rohres 1 ausgerichtet ist. Hierbei weisen die Südpole der beiden Permanentmagnete 20 und 21 zur äußeren Oberfläche 13 hin. Zwischen den Permanentmagneten 20 und 21 und der Rohroberfläche 13 sind die Sende- und Empfangswandler 11 und 12 angeordnet. Sowohl eine zum Rohr parallele wie auch eine senkrechte Ausrichtung des Magnetfeldes kann auch durch einen Elektromagneten des Durchflussmessers erzeugt werden.

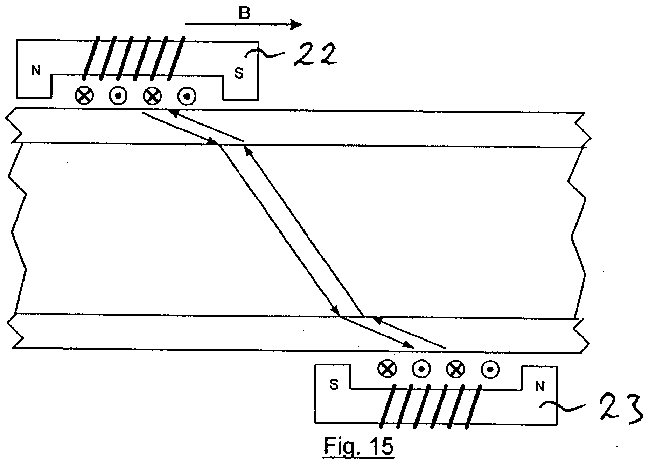

Fig. 15 zeigt eine solche Ausrichtung, in der mittels zweier Elektromagneten 22 und 23 ein in Rohrlängsrichtung ausgerichtetes Magnetfeld erzeugt wird. Entsprechend ist das Magnetfeld in Längserstreckung der Elektromagneten ausgebildet.

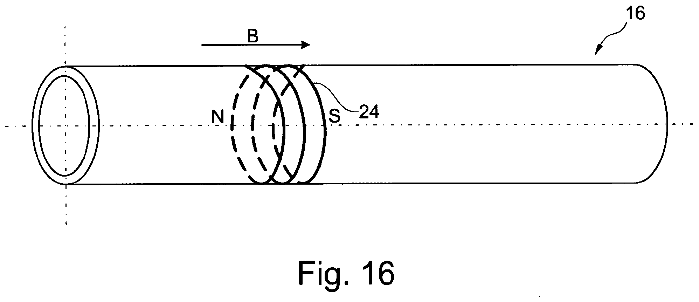

Eine weitere Ausbildung eines Elektromagneten ist in der Fig. 16 gezeigt. Hierbei handelt es sich um einen durch einen beispielsweise um ein Rohr 1 wickelbaren Leiter 24, der entsprechend mit einem Gleichstrom oder niederfrequenten Wechselstrom beaufschlagt wird. Die Hochfrequenzinduktionsspulen können in einem solchen Fall wie in der Fig. 15 zwischen Rohr und Magnet und eingefasst zwischen den Polen des Magneten angeordnet sein. Sie können auch einfach über die in der Fig. 16 sichtbaren Wicklungen des Leiters 24 gewickelt werden.

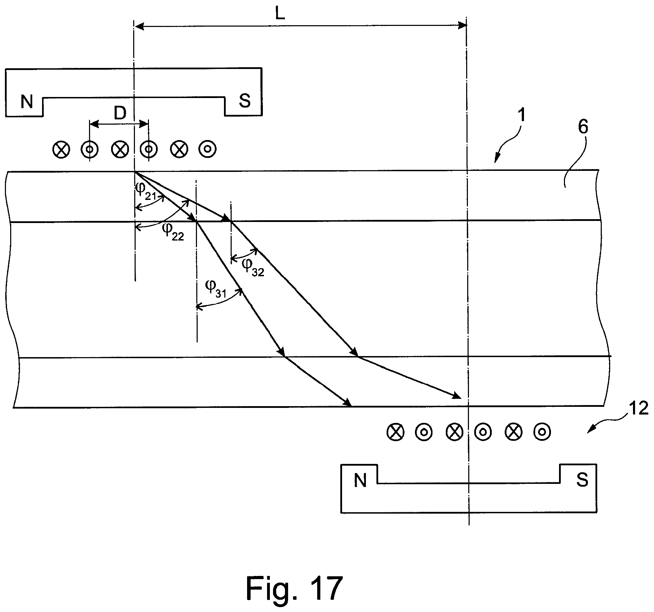

Erfindungsgemäß ist ein akustischer Durchflussmesser dahingehend ausbildbar, dass variierende Abstände L zwischen den Einkoppelpunkten in ein Objekt, beispielsweise das in der Fig. 17 gezeigte Rohr 1, automatisch und elektronisch ausgeglichen werden können.

Eine exakte Positionierung der Wandler ist nicht notwendig, die Anpassung erfolgt über die Anpassung der Frequenz, mit der die Wandler betrieben werden. Fig. 17 zeigt einzelne Pfade der Ultraschallwellen für zwei verschiedene Frequenzen f1 und f2. Die bei einer Frequenz f1 erzeugte Welle koppelt unter einem Winkel $\varphi 21$ in die Rohrwand 6 und weiter unter einem Winkel $\varphi 31$ in das Medium. Entsprechend ist der durch die Frequenz f2 erzeugte Ultraschall durch Winkel $\varphi 22$ und $\varphi 32$ gekennzeichnet. Durch Änderung der Frequenz kann die Ausrichtung des Strahls für einen optimierten Empfang im Empfangswandler 12 durchgeführt werden.

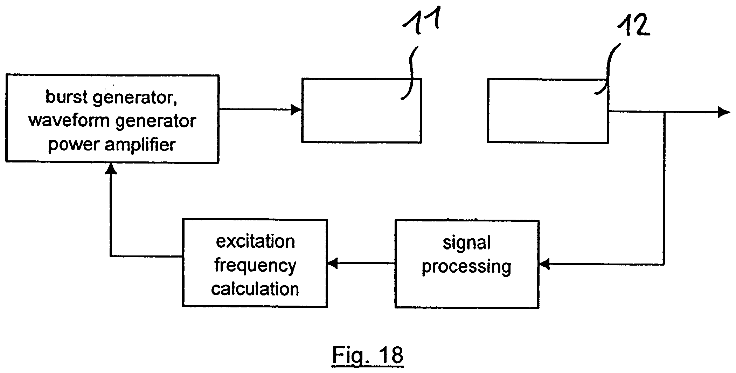

Durch die Frequenzanpassung, die nach dem Schema der Fig. 18 auch automatisch erfolgen kann, können auch Änderungen der Schallgeschwindigkeit im Medium beispielsweise aufgrund eines sich ändernden Mediums, aufgrund von Temperaturschwankungen oder Druckvariationen ausgeglichen werden. Zusätzlich kann durch die gezielte Anregung von Lamb-Wellen eine Mehrzahl von in axialer Richtung versetzten Longitudinalwellen im Rohr erzeugt werden, so dass die Wahrscheinlichkeit, ein ausreichend genaues Empfangssignal an einem axial versetzten Empfänger zu erhalten, erhöht ist.

Über eine während der Messungen abwechselnd durchgeführte Feedbackschleife gemäß Fig. 18 kann die Signalstärke angepasst und ggf. verbessert werden. Hierdurch wird ein optimales Signal gefunden ("auto-alignment").

Nachfolgend wird ein erfindungsgemäßes Verfahren zum Anpassen des Signals beschrieben. Der Sendewandler 11 wird über einen burst-Generator bzw. einen Frequenzgeber und einen Verstärker betrieben.

Das im Empfangswandler 12 empfangene Signal wird zur Bestimmung der Fließgeschwindigkeit verwendet. In einer Feedback-Schleife wird zwischen den eigentlichen Messungen oder als Teil davon von Zeit zu Zeit beispielsweise ein "Frequenz-Sweep" gestartet. Von der Vielzahl der dann vom Sendewandler ausgegebenen Frequenzen wird diejenige herausgesucht, die zu einem optimalen Empfangssignal führt.

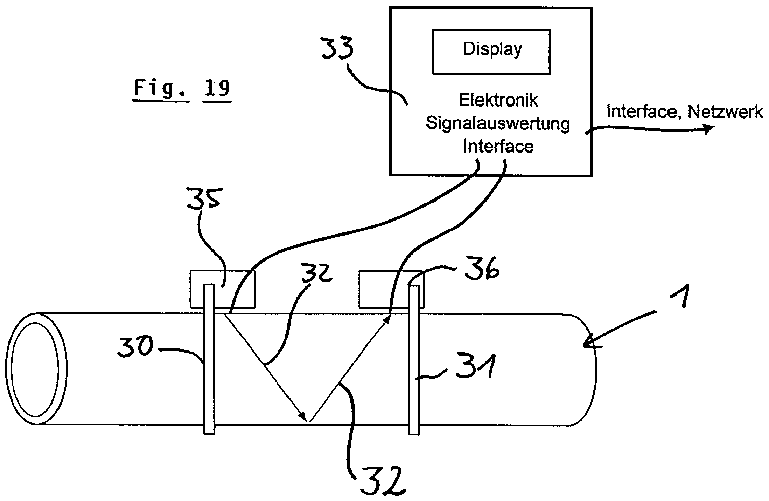

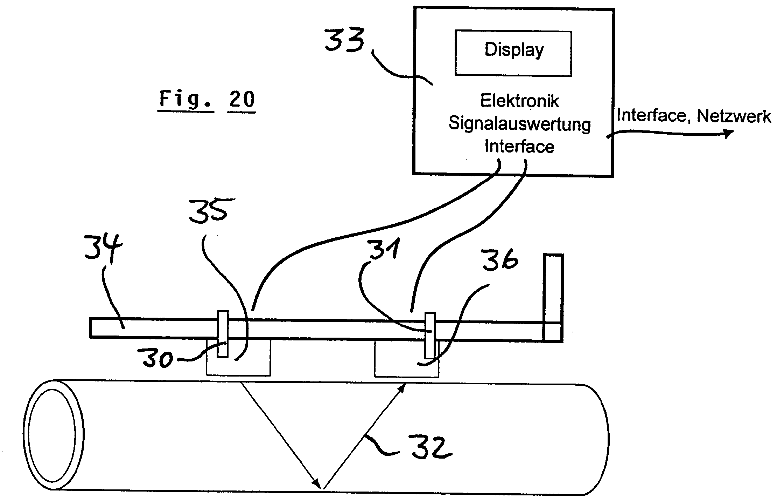

Ein teilweiser Aufbau eines erfindungsgemäßen Durchflussmessers ist in den Fig. 19 und 20 gezeigt. Nicht dargestellt sind die Magnetfelderzeuger. In der Fig. 19 sind zwei Halterungen 30 und 31 eines Durchflussmessers dergestalt ausgebildet, dass sie komplett um das Rohr 1 herum legbar sind. Hierbei handelt es sich vorzugsweise um mit variablen Durchmessern versehbare Schellen. In dem Rohr 1 wird dann mittels der Wandler 35 und 36 eine Schallwelle erzeugt, die über Striche 32 angedeutet ist. Die zugehörigen Permanentmagnete befinden sich bei den Ausführungsbeispielen der Fig. 19 und 20 innerhalb der Gehäuse der Wandler 35 und 36.

Das vom Sendewandler 35 erzeugte Signal wird vom Empfangswandler 36 empfangen und an eine Elektronik 33 weitergeleitet, in der die Signalauswertung stattfindet und von wo das Signal weiter in ein Netzwerk eingespeist werden kann. Ebenfalls kann ein erfindungsgemäßer Durchflussmesser eine Displayeinheit zur Anzeige von Informationen aufweisen. Für den Fall von Hochtemperaturanwendungen in einem Bereich von mehr als 180°C, bevorzugt von mehr als 300°C sind die Sende- und Empfangswandler 35 und 36 mittels der Halterungen 30 und 31 auf einem zusätzlichen Haltesystem 34 montiert (Fig. 20). Hierdurch werden die Wandler 35,36 beabstandet vom Rohr und mechanisch entkoppelt von diesem gehalten. Ansonsten ist der Aufbau wie in der Fig. 19.

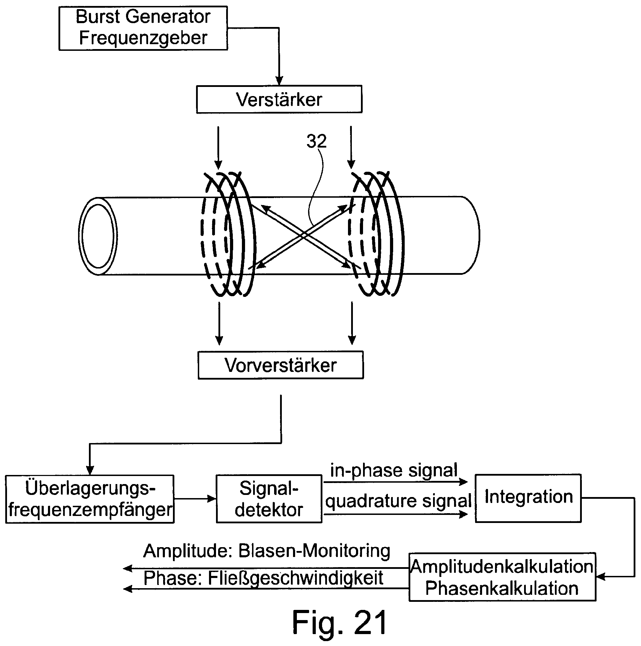

Ein komplettes Funktionsdiagramm des Verfahrensablaufs ist in der Fig. 21 dargestellt. Hierbei wird zur Detektion einer Durchflussrate über einen Frequenzgeber und einen Verstärker ein Signal in den Sendewandler gegeben, der mit einem vorbeschriebenen Setup eine Ultraschallwelle erzeugt. Beim dargestellten Setup handelt es sich um zwei Paare parallel und vollständig um das Rohr gewickelter Sende- und Empfangswandler. Die von den zwei Empfangswandlern aufgenommenen Signale werden an einen Vorverstärker überführt. Vom Vorverstärker werden die Signale weitergeleitet an einen Überlagerungsfrequenzempfänger. In einem nachgeschalteten Integrator werden die vom Signaldetektor, beispielsweise einem Quadraturamplitudendemodulator, detektierten Signale verstärkt und zur Amplitudenkalkulation und Phasenkalkulation verwendet. Aus der Phasenkalkulation der Ultraschallwellen ergibt sich dann die Flussgeschwindigkeit, während aus der Amplitudenauswertung eine Bestimmung von Blasen in der Flüssigkeit erfolgen kann.

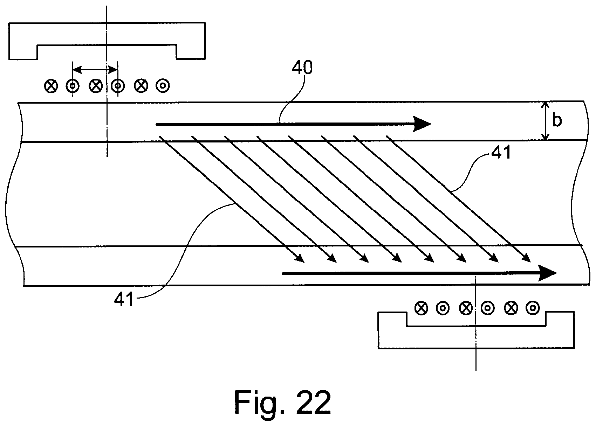

In Fig. 22 ist ein erfindungsgemäßer Durchflussmesser in einer weiteren Konfiguration gezeigt, in der der Sendewandler zur Erzeugung von Lamb-Wellen 40 ausgelegt ist. Diese Druck-/Scherwellen breiten sich als geführte Welle in dem Objekt aus, was zu einer sehr gleichmäßigen Durchschallung des freien Innenraums mit einer Mehrzahl von Longitudinalwellen 41 führt. Durch die Vielzahl der Longitudinalwellen ist ein solcher erfindungsgemäßer Durchflussmesser besonders unempfindlich bezüglich des Abstands von Sende- zu Empfangswandler. Die Auslegung der Wandler erfolgt beim Beispiel der Fig. 22 insbesondere in Abhängigkeit der Wanddicke b des Objekts, d.h. die Hochfrequenz der Wandler wird in Abhängigkeit der Wanddicke b des Objekts angepasst.

**Patentansprüche**

1. Akustischer Durchflussmesser zur nichtinvasiven Bestimmung des Flusses oder der Durchflussrate in von Medien durchströmten, elektrisch leitenden Objekten, insbesondere von Rohren oder Pipelines, mit einem Sendewandler zur Erzeugung wenigstens einer Ultraschallwelle im Objekt, welche an einer zum Medium gerichteten Innenseite des Objekts als Longitudinalwelle in das Medium einkoppelt, und mit einem Empfangswandler zur Detektion eines Ultraschallsignals im Objekt, wobei sich das Ultraschallsignal zumindest teilweise durch die Longitudinalwelle ergibt, wobei der Sendewandler als Hochfrequenzinduktionsspule unter Verzicht auf eine akustische Kopplung des Sendewandlers mit der Oberfläche des Objekts zur Erzeugung eines variierenden Magnetfelds in einem oberflächennahen Bereich des insbesondere metallischen Objekts ausgebildet ist und durch Wechselwirkung des variierenden Magnetfelds mit einem statischen oder quasi-statischen Magnetfeld in diesem Bereich die Ultraschallwelle erzeugt wird, **dadurch gekennzeichnet, dass** der Sendewandler auf die Erzeugung von Lamb-Wellen n-ter Ordnung mit n ganzzahlig und größer gleich 0 ausgelegt ist, wobei die Hochfrequenz der Wandler in Abhängigkeit der Wanddicke des Objekts angepasst ist..

2. Durchflussmesser nach Anspruch 1, **dadurch gekennzeichnet, dass** der insbesondere als Hochfrequenzinduktionsspule ausgebildete Empfangswandler zur Detektion des Ultraschallsignals unter Verzicht auf eine akustische Kopplung mit dem Objekt ausgebildet ist.

3. Durchflussmesser nach Anspruch 1 oder 2, **gekennzeichnet durch** eine Ausbildung zur Erzeugung eines insbesondere durch einen Permanent- und/oder einen Elektromagneten ausgebildeten statischen oder quasistatischen Magnetfelds, welches längs einer Axialrichtung des Objekts oder normal zu dieser ausgerichtet ist.

4. Durchflussmesser nach einem der vorherigen Ansprüche, **dadurch gekennzeichnet, dass** eine Leiterbahn, insbesondere eine Wicklung, der Hochfrequenzinduktionsspule für die bestimmungsgemäße Anwendung senkrecht zur Längsachse des Objekts auszurichten ist.

5. Durchflussmesser nach einem der vorherigen Ansprüche, **dadurch gekennzeichnet, dass** die zum Objekt zu richtende Seite von Sende- und/oder Empfangswandler gekrümmt ausgebildet ist.

6. Durchflussmesser nach einem der vorhergehenden Ansprüche zur Bestimmung des Flusses in einem Rohr, **dadurch gekennzeichnet, dass** der Sende- und/oder der Empfangswandler zum Anlegen an das Rohr und/oder Umwickeln des Rohres ausgebildet ist.

7. Durchflussmesser nach Anspruch 6, **dadurch gekennzeichnet, dass** Sende- und Empfangswandler um das Objekt herum zu wickelnde oder zu legende Leiterbahnen aufweisen.

8. Durchflussmesser nach Anspruch 6 oder 7, **dadurch gekennzeichnet, dass** Sende- und/oder Empfangswandler zumindest in Teilen flexibel ausgebildet sind, um an unterschiedliche Rohraußendurchmesser anpassbar zu sein.

9. Durchflussmesser nach einem der Ansprüche 6 bis 8, **dadurch gekennzeichnet, dass** Sende- und/oder Empfangswandler eine mit einem elektrischen Leiter versehene Folie und/oder ein Flachbandkabel aufweisen, die zumindest teilweise um das Rohr wickelbar ist.

10. Durchflussmesser nach einem der vorherigen Ansprüche mit einem eine Leiterbahn aufweisenden (Sende- und/oder Empfangs-) Wandler, **dadurch gekennzeichnet, dass** die Leiterbahn mäandrierend ausgebildet ist.

11. Durchflussmesser nach einem der vorherigen Ansprüche, **dadurch gekennzeichnet, dass** Sende- und/oder Empfangswandler darauf ausgelegt sind, den Durchfluss in einem vollständigen Querschnitt des Rohres zu erfassen.

12. Durchflussmesser nach einem der vorherigen Ansprüche, **dadurch gekennzeichnet, dass** eine Auswerteeinrichtung zur Detektion und/oder Größenbestimmung von Blasen im Fluid ausgebildet ist.

13. Durchflussmesser nach einem der vorherigen Ansprüche, **dadurch gekennzeichnet, dass** zur optimierten Ausrichtung einer im Medium zu erzeugenden Longitudinalwelle die Hochfrequenz, mit der der Sendewandler zu betreiben ist, vorzugsweise automatisch variierbar ist.

14. Durchflussmesser nach einem der vorherigen Ansprüche, **gekennzeichnet, durch** eine Ausbildung zur Messung der Wandstärke und/oder des Drucks des Mediums anhand des Ultraschallsignals.

15. Durchflussmesser nach einem der vorherigen Ansprüche, **dadurch gekennzeichnet, dass** Sende- und Empfangswandler dergestalt hitzebeständige Materialien umfassen, dass sie zur vorzugsweise berührungsfreien Messung des Durchflusses in einem mehr als 180 °C heißen, bevorzugt einem mehr als 350 °C heißen Objekt ausgebildet sind.

16. Durchflussmesser nach einem der vorherigen Ansprüche, **gekennzeichnet durch** einen modularen Aufbau dergestalt, dass Sende- und/oder Empfangswandler dauerhaft an einem Objekt positionierbar und zur Messung des Durchflusses mit einer insbesondere von Bedienpersonal tragbaren Ansteuer- und Auswerteeinheit verbindbar sind, wobei der Durchflussmesser vorzugsweise eine Vorrichtung zur Erzeugung des statischen Magnetfeldes aufweist.

17. Durchflussmesser nach einem der vorherigen Ansprüche, **dadurch gekennzeichnet, dass** die Hochfrequenzspule zur Erzeugung der Ultraschallwelle in einem Frequenzbereich von 20 kHz bis 50 MHz, bevorzugt von 50 kHz bis 3 Mhz betreibbar ist.

**Claims**

1. Acoustic flowmeter for non-invasively determining the flow or flow rate in electrically conductive objects through which media flows, in particular pipes or pipelines, comprising a transmitting transducer for generating at least one ultrasonic wave in the object, which wave is coupled into the medium as a longitudinal wave on an inner side of the object facing the medium, and comprising a receiving transducer for detecting an ultrasonic signal in the object, the ultrasonic signal resulting from the longitudinal wave, at least in part, the transmitting transducer being designed as a high-frequency induction coil, without an acoustic coupling of the transmitting transducer to the surface of the object, in order to generate a varying magnetic field in a surface-proximal region of the in particular metal object, and the ultrasonic wave being generated by the interaction between the varying magnetic field and a static or quasi-static magnetic field in this region, **characterised in that** the transmitting transducer is designed to generate Lamb waves of the nth order, where n is an integer that is greater than or equal to 0, the high frequency of the transducer being modified depending on the wall thickness of the object.

2. Flowmeter according to claim 1, **characterised in that** the receiving transducer designed in particular as a high-frequency induction coil is designed to detect the ultrasonic signal, without an acoustic coupling to the object.

3. Flowmeter according to either claim 1 or claim 2, **characterised by** a design that generates a static or quasi-static magnetic field formed in particular by a permanent magnet and/or an electromagnet, which field is oriented in an axial direction of the object or perpendicularly thereto.

4. Flowmeter according to any of the preceding claims, **characterised in that** a conductive path, in particular a winding, of the high-frequency induction coil is intended to be oriented perpendicularly to the longitudinal axis of the object for the intended application.

5. Flowmeter according to any of the preceding claims, **characterised in that** the side of the transmitting transducer and/or the receiving transducer facing the object is curved.

6. Flowmeter according to any of the preceding claims for determining the flow in a pipe, **characterised in that** the transmitting transducer and/or the receiving transducer are designed to be applied to the pipe and/or to be wound around the pipe.

7. Flowmeter according to claim 6, **characterised in that** the transmitting transducer and the receiving transducer have conductive paths that are intended to be wound or applied around the object.

8. Flowmeter according to either claim 6 or claim 7, **characterised in that** the transmitting transducer and/or the receiving transducer are designed to be flexible, at least in regions, in order to be adaptable to different pipe external diameters.

9. Flowmeter according to any of claims 6 to 8, **characterised in that** the transmitting transducer and/or the receiving transducer have a film provided with an electrical conductor and/or a ribbon cable, which film can be wound around the pipe, at least in part.

10. Flowmeter according to any of the preceding claims, comprising a (transmitting and/or a receiving) transducer having a conductive path, **characterised in that** the conductive path has a meandering design.

11. Flowmeter according to any of the preceding claims, **characterised in that** the transmitting transducer and/or the receiving transducer are designed to detect the flow in a complete cross section of the pipe.

12. Flowmeter according to any of the preceding claims, **characterised in that** an analysis device is designed to detect and/or determine the size of bubbles in the liquid.

13. Flowmeter according to any of the preceding claims, **characterised in that** the high frequency with which the transmitting transducer is intended to be operated can be varied, preferably automatically, in order to optimise the orientation of a longitudinal wave generated in the medium.

14. Flowmeter according to any of the preceding claims, **characterised by** a design that is intended to measure the wall strength and/or pressure of the medium on the basis of the ultrasonic signal.

15. Flowmeter according to any of the preceding claims, **characterised in that** the transmitting transducer and the receiving transducer comprise heat-resistant materials such that said transducers are designed to preferably contactlessly measure the flow in an object hotter than 180 °C, preferably hotter than 350 °C.

16. Flowmeter according to any of the preceding claims, **characterised by** a modular construction such that the transmitting transducer and/or the receiving transducer can be permanently positioned on an object and can be connected to an actuation and analysis unit that can be carried in particular by operating staff in order to measure the flow, the flowmeter preferably having an apparatus for generating the static magnetic field.

17. Flowmeter according to any of the preceding claims, **characterised in that** the high-frequency coil for generating the ultrasonic wave can be operated in a frequency range of from 20 kHz to 50 MHz, preferably from 50 kHz to 3 MHz.

**Revendications**

1. Débitmètre acoustique destiné à déterminer de façon non invasive le flux ou le débit dans des objets électriquement conducteurs, notamment des conduits ou des pipelines, traversés par des milieux, le débitmètre acoustique comprenant un transducteur d'émission destiné à générer dans l'objet au moins une onde ultrasonore qui est injectée sous la forme d'une onde longitudinale dans le milieu sur un côté intérieur de l'objet tourné vers le milieu, et un transducteur de réception destiné à détecter un signal ultrasonore dans l'objet, le signal ultrasonore résultant au moins en partie de l'onde longitudinale, le transducteur d'émission étant conçu sous la forme d'une bobine d'induction à haute fréquence de façon à se passer du couplage acoustique du transducteur d'émission avec la surface de l'objet pour générer un champ magnétique variable dans une région proche de la surface de l'objet notamment métallique et l'onde ultrasonore est générée par interaction du champ magnétique variable avec un champ magnétique statique ou quasi-statique dans cette région, **caractérisé en ce que** le transducteur d'émission est conçu pour générer des ondes de Lamb d'ordre n, n étant un nombre entier supérieur ou égal à 0, la fréquence élevée du transducteur étant adaptée en fonction de l'épaisseur de paroi de l'objet.

2. Débitmètre selon la revendication 1, **caractérisé en ce que** le transducteur de réception, conçu notamment sous la forme d'une bobine d'induction à haute fréquence, est conçu pour détecter le signal ultrasonore de façon à se passer d'un couplage acoustique avec l'objet.

3. Débitmètre selon la revendication 1 ou 2, **caractérisé en ce qu'**il est conçu pour générer un champ magnétique statique ou quasi-statique qui est formé en particulier par un aimant permanent et/ou électroaimant et qui est orienté suivant une direction axiale de l'objet ou perpendiculairement à celle-ci.

4. Débitmètre selon l'une des revendications précédentes, **caractérisé en ce qu'**une piste conductrice, en particulier un enroulement, de la bobine d'induction à haute fréquence doit être orienté perpendiculairement à l'axe longitudinal de l'objet pour l'application envisagée.

5. Débitmètre selon l'une des revendications précédentes, **caractérisé en ce que** le côté des transducteurs d'émission et/ou de réception, qui est dirigé vers l'objet, est incurvé.

6. Débitmètre selon l'une des revendications précédentes destiné à déterminer le débit dans un tube, **caractérisé en ce que** le transducteur d'émission et/ou de réception est conçu pour être appliqué sur le tube et/ou pour envelopper le tube.

7. Débitmètre selon la revendication 6, **caractérisé en ce que** les transducteurs d'émission et de réception comportent des pistes conductrices à appliquer et/ou à enrouler autour de l'objet.

8. Débitmètre selon la revendication 6 ou 7, **caractérisé en ce que** les transducteurs d'émission et/ou de réception sont conçus pour être flexibles, au moins en partie, afin de pouvoir être adapté à différents diamètres extérieurs de tube.

9. Débitmètre selon l'une des revendications 6 à 8, **caractérisé en ce que** les transducteurs d'émission et/ou de réception comportent un film, muni d'un conducteur électrique, et/ou un câble plat qui peut être enroulé au moins partiellement autour du tube.

10. Débitmètre selon l'une des revendications précédentes, comprenant un transducteur (d'émission et/ou de réception) muni d'une piste conductrice, **caractérisé en ce que** la piste conductrice est conçu sous la forme de méandres.

11. Débitmètre selon l'une des revendications précédentes, **caractérisé en ce que** les transducteurs d'émission et/ou de réception sont conçus pour détecter le débit dans toute la section transversale du tube.

12. Débitmètre selon l'une des revendications précédentes, **caractérisé en ce qu'**un moyen d'évaluation est conçu pour détecter des bulles dans le fluide et/ou déterminer leur taille.

13. Débitmètre selon l'une des revendications précédentes, **caractérisé en ce que**, pour orienter de façon optimale une onde longitudinale à générer dans le fluide, la fréquence élevée avec laquelle il faut faire fonctionner le transducteur d'émission, est variable de préférence automatiquement,

14. Débitmètre selon l'une des revendications précédentes, **caractérisé en ce qu'**il conçu pour mesurer l'épaisseur de paroi et/ou la pression du fluide sur la base du signal ultrasonore.

15. Débitmètre selon l'une des revendications précédentes, **caractérisé en ce que** les transducteurs d'émission et de réception comportent des matières résistantes à la chaleur de sorte qu'ils sont conçus pour mesurer, de préférence sans contact, le débit dans un objet chaud à plus de 180°C, de préférence chaud à plus de 350°C.

16. Débitmètre selon l'une des revendications précédentes, **caractérisé par** une structure modulaire de sorte que les transducteurs d'émission et/ou de réception peut être positionner de façon permanente sur un objet et peuvent être relié, pour mesurer le débit, à une unité de commande et d'évaluation portable notamment par le personnel d'exploitation, le débitmètre comportant de préférence un dispositif destiné à générer le champ magnétique statique.

17. Débitmètre selon l'une des revendications précédentes, **caractérisé en ce que** la bobine à haute fréquence peut être utilisée pour générer l'onde ultrasonore dans une gamme de fréquences de 20 kHz à 50 MHz, de préférence de 50 kHz à 3 MHz.

Fig 1

EP 2 691 749 B1

Fig. 2

Fig. 3

Fig. 4a

Fig. 4b

EP 2 691 749 B1

Fig. 5

Fig. 6

Fig. 7

Fig. 8

Fig. 9

Fig. 10

Fig. 11

EP 2 691 749 B1

Fig. 12

EP 2 691 749 B1

Fig. 13

Fig. 14

B

N    S    22

⊗  ⊙  ⊗  ⊙

⊗  ⊙  ⊗  ⊙

S    N    23

Fig. 15

Fig. 16

Fig. 17

EP 2 691 749 B1

EP 2 691 749 B1

```
          ┌──────────────────┐        11              12
          │ burst generator, │        ╮               ╮
          │ waveform generator│       ┌──────────┐    ┌──────────┐
          │ power amplifier  │───────▶│          │    │          │──────▶
          └──────────────────┘        └──────────┘    └──────────┘
                   ▲                                        │
                   │                                        │
          ┌──────────────────┐        ┌──────────┐          │
          │   excitation     │        │  signal  │          │
          │   frequency      │◀───────│processing│◀─────────┘
          │  calculation     │        │          │
          └──────────────────┘        └──────────┘
```

Fig. 18

EP 2 691 749 B1

Fig. 19

33

Display

Elektronik
Signalauswertung
Interface

Interface, Netzwerk

35

32

36

30

31

1

32

Fig. 20

Display

Elektronik
Signalauswertung
Interface

Interface, Netzwerk

33

35

34

30

31

36

32

EP 2 691 749 B1

Burst Generator
Frequenzgeber

Verstärker

32

Vorverstärker

Überlagerungs-frequenzempfänger → Signal-detektor

in-phase signal
quadrature signal

Integration

Amplitude: Blasen-Monitoring
Phase: Fließgeschwindigkeit

Amplitudenkalkulation
Phasenkalkulation

Fig. 21

EP 2 691 749 B1

EP 2 691 749 B1

Fig. 22

**IN DER BESCHREIBUNG AUFGEFÜHRTE DOKUMENTE**

**In der Beschreibung aufgeführte Patentdokumente**

- DE 4124692 A1